Europäisches Patentamt

European Patent Office

Office européen des brevets

(19)

(11) Veröffentlichungsnummer: **0 368 238**
**A2**

(12) **EUROPÄISCHE PATENTANMELDUNG**

(21) Anmeldenummer: **89120590.8**

(22) Anmeldetag: **07.11.89**

(51) Int. Cl.⁵: **B29D 31/00, B29C 67/14, B32B 27/00, //B29L31:60**

(30) Priorität: **10.11.88 DE 3838153**

(43) Veröffentlichungstag der Anmeldung:
**16.05.90 Patentblatt 90/20**

(84) Benannte Vertragsstaaten:
**AT BE CH DE ES FR GB GR IT LI LU NL SE**

(71) Anmelder: **Schütz-Werke GmbH & Co. KG.**
**Bahnhofstrasse 25**
**D-5418 Selters(DE)**

(72) Erfinder: **Krass, Peter, Dipl.-Ing.**
**In der Mühle**
**B-4731 Eynatten(BE)**

(74) Vertreter: **Pürckhauer, Rolf**
**Friedrich-Ebert-Strasse 27 Postfach 10 09 28**
**D-5900 Siegen 1(DE)**

(54) **Leichtbauwerkstoff sowie Verfahren und Anlage zur Herstellung von Wabenstrukturen aus dem Leichtbauwerkstoff.**

(57) Platten mit einer Wabenstruktur z.B. aus Polyamidpapier werden als Kernwerkstoff für Sandwichplatten mit Deckschichten aus mit Kohlenstoffaser oder Glasfaser verstärkten Kunststoffen oder Aluminium verwendet. Der neue Leichtbauwerkstoff soll zur Herstellung von Wabenstrukturen dienen, die sich gegenüber den bekannten Wabenstrukturen durch eine höhere Festigkeit und Steifigkeit, eine verbesserte Energieaufnahme sowie ein verbessertes Brandverhalten auszeichnen.

Der Leichtbauwerkstoff besteht aus einer Faserthermoplastverbundfolie, welche Fasern aus Kohlenstoff, Siliciumkarbid, Whisker oder dgl. in Form von Geweben, Gelegen oder Matten enthält, und die Fasern sind in eine Matrix aus einem Hochtemperaturthermoplast wie Polyetheretherketon, Polyethersulfon oder Polysulfon eingebettet.

Die Einsatzbereiche der Sandwichplatten mit Wabenkern liegen in der Luft- und Raumfahrt, im Maschinenbau und beim Bau von Schienen- und Wasserfahrzeugen sowie von Sport-und Freizeitgeräten.

EP 0 368 238 A2

## Leichtbauwerkstoff sowie Verfahren und Anlage zur Herstellung von Wabenstrukturen aus dem Leichtbauwerkstoff

Die Erfindung betrifft einen Leichtbauwerkstoff sowie Verfahren und Anlagen zur Herstellung von Wabenstrukturen aus dem Leichtbauwerkstoff.

Platten mit einer Wabenstruktur, die bevorzugt aus einem hochfesten Polyamidpapier gefertigt und mit einem hochtemperaturbeständigen Phenolharz überzogen werden, werden als Kernwerkstoff für Sandwichplatten mit Deckschichten aus mit Kohlenstoffaser oder Glasfaser verstärkten Kunststoffen oder Aluminium verwendet. Derartige Sandwichplatten sind Bauelemente mit sehr hoher Festigkeit und Steifigkeit, hohem spezifischen Energieaufnahmevermögen sowie einer guten Elastizität bei niedrigstem Gewicht. Die Einsatzbereiche der Sandwichplatten mit Wabenkern liegen in der Luft- und Raumfahrt, im Maschinenbau und beim Bau von Schienen- und Wasserfahrzeugen sowie von Sport- und Freizeitgeräten.

Leichtbauplatten mit einer Wabenstruktur werden nach dem "Expansionsverfahren" oder dem "Profilierverfahren" gefertigt.

Bei dem Expansionsverfahren wird das von einer Rolle ablaufende Bandmaterial, z.B. Polyamidpapier, im Blätter zerteilt, auf die Blätter wird in geraden, in Bandlaufrichtung verlaufenden Linien ein Kleber aufgepunktet, die Blätter werden gestapelt und die Klebelinien gehärtet und schließlich werden die aufeinander gestapelten Papierlagen zu einem Wabenblock auseinandergezogen, von dem Platten mit der gewünschten Stärke abgeschnitten werden können. Ferner besteht die Möglichkeit, von dem Blattstapel Scheiben mit der gewünschten Stärke abzuschneiden und diese Scheiben dann zu Platten mit einer Wabenstruktur auseinanderzuziehen.

Das Profilierverfahren wird zur Herstellung von Wabenstrukturen mit größerer Festigkeit eingesetzt. Bei diesem Verfahren wird das von einer Rolle ablaufende Bandmaterial, das z.B. aus Aluminium besteht, mittels Profilrollen z.B. zu einem Trapezprofilband gewalzt, das profilierte Band wird in Trapezprofilplatten zerteilt, auf die Erhöhungen der Trapezprofilplatten wird ein Kleber aufgetragen, und die Platten werden aufeinander gestapelt und zu einem Wabenblock zusammengeklebt, von dem Paneele mit der gewünschten Stärke abgeschnitten werden.

Der Erfindung liegt die Aufgabe zugrunde, einen Leichtbauwerkstoff sowie Verfahren und Anlagen zur Herstellung von Wabenstrukturen aus diesem Werkstoff zu entwickeln, die sich gegenüber den bekannten Wabenstrukturen durch eine höhere Festigkeit und Steifigkeit, eine verbesserte Energieaufnahme sowie ein verbessertes Brandverhalten auszeichnen.

Der erfindungsgemäße Leichtbauwerkstoff, der die Zielsetzungen der Aufgabenstellung erfüllt, besteht aus einer Faserthermoplastverbundfolie, welche Fasern aus Kohlenstoff, Siliciumkarbid, Whisker oder dgl. in Form von Geweben, Gelegen oder Matten enthält, und die Fasern sind in eine Matrix aus einem Hochtemperaturthermoplast wie Polyetheretherketon, Polyethersulfon oder Polysulfon eingebettet.

Zur Herstellung von Wabenstrukturen aus der vorbeschriebenen Faserthermoplastverbundfolie werden erfindungsgemäß drei Verfahren vorgeschlagen, bei denen das bekannte "Profilierverfahren" zur Anwendung gelangt und die sich durch die Fertigung der Faserthermoplastverbundfolie als Ausgangsmaterial für die Wabenstrukturen unterscheiden.

Bei dem ersten Verfahren werden ein oberes und ein unteres aufgeheiztes Thermoplastfolienband und ein zwischen den beiden Folienbändern geführter Faserwerkstoff durch einen Walzvorgang miteinander verbunden.

Das zweite Verfahren ist dadurch gekennzeichnet, daß Thermoplastfolienband extrudiert und anschließend durch einen Walzvorgang mit einem Faserwerkstoff verbunden wird.

Das dritte Verfahren zeichnet sich dadurch aus, daß ein Thermoplastgranulat geschmolzen und im Schmelzzustand mit einem Faserwerkstoff zu einer Faserthermoplastverbundfolie gewalzt wird.

Das letztere Verfahren vermeidet die bei den beiden ersten Verfahren auftretenden Nachteile der schlechten Faserbenetzung und der Faserbeschädigung, die durch die hohe Viskosität der verwendeten Thermoplastverbundfolie bewirkt werden.

Bei allen drei Verfahren wird nach dem Walzen der Faserthermoplastverbundfolie diese durch anschließendes einmaliges oder mehrfaches Aufheizen und Walzen verdichtet und auf die gewünschte Stärke gebracht.

Nachstehend sind drei nach den vorbeschriebenen Verfahren arbeitende Anlagen anhand schematischer Zeichnungen erläutert. Es zeigt

Fig. 1 eine Seitenansicht einer vollständigen Anlage zur Fertigung von Wabenstrukturen,

Fign. 2 u. 3 Seitenansichten zweier abgeänderter

Anlagenteile I zur Herstellung der Faserthermoplastverbundfolie,

Fig. 4 einen ausschnittsweisen Längsschnitt einer profilierten Platte für die Herstellung einer Wabenstruktur und

Fig. 5 eine Abänderung des Anlagenteils II

2

zur Herstellung einer Wabenstruktur aus der Faserthermoplastverbundfolie.

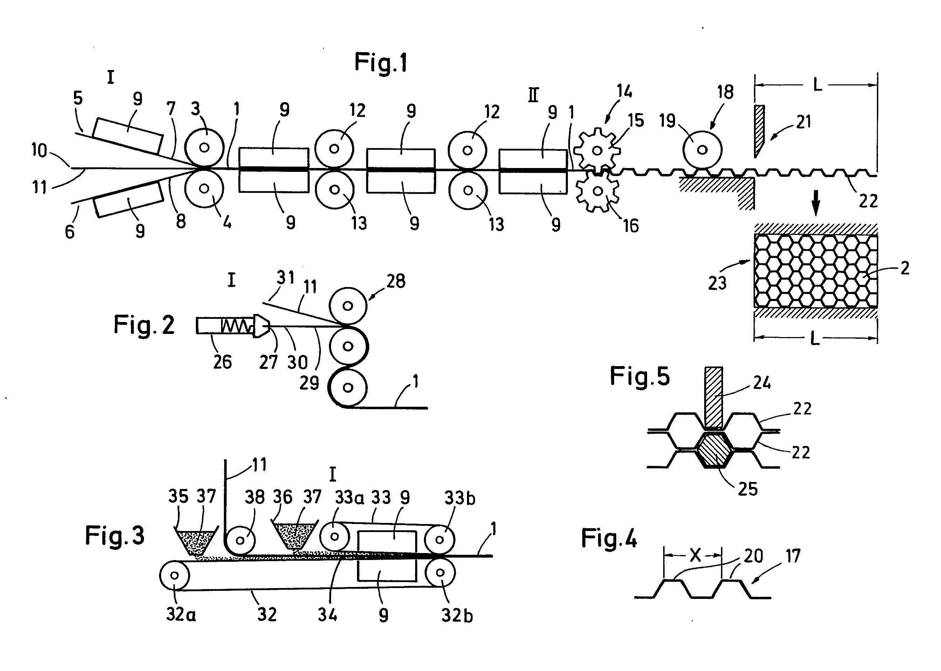

Die Anlage nach Fig. 1 besteht aus dem Anlagenteil I zur Herstellung der Faserthermoplastverbundfolie 1 in Bandform und dem Anlagenteil II zur Weiterverarbeitung der Verbundfolie zu einem Block 2 mit einer Wabenstruktur, von dem Wabenplatten abgeschnitten werden, die als Kernwerkstoff für Sandwichplatten mit Deckschichten aus mit Kohlenstoffaser oder Glasfaser verstärkten Kunststoffen oder Aluminium verwendet werden.

Der Anlagenteil I umfaßt ein Duo-Walzgerüst mit einem Kalanderwalzenpaar 3, 4, eine obere und eine untere Bandführung 5, 6, für zwei von nicht dargestellten Rollen ablaufende Thermoplastfolienbänder 7, 8, Heizvorrichtungen 9 im Bereich der Bandführungen 5, 6 und eine mittlere Führung 10 für einen Faserwerkstoff 11, der von einer nicht dargestellten Rolle abgezogen wird.

Der Anlagenteil II besteht aus drei Heizvorrichtungen 9 und zwei weiteren Duo-Walzgerüsten mit Kalanderwalzenpaaren 12, 13, die im Wechsel hintereinander angeordnet sind, einer Profiliervorrichtung 14 mit zwei Profilwalzen 15, 16, mit denen das Faserthermoplastverbundfolienband 1 zu einem Trapezprofil 17 mit einer Teilung X gewalzt wird, einer Vorrichtung 18 mit einer Walze 19 zum Auftragen eines Klebers auf die Erhöhungen 20 des Trapezprofils 17, einer Schneidvorrichtung 21 zum Abschneiden von profilierten Platten 22 aus Faserthermoplastverbundfolie und einer Preßvorrichtung 23 zum Zusammenkleben der aufeinander gestapelten Platten 22 zu dem Wabenblock 2.

Anstatt durch Kleben können die profilierten Platten 22 auch durch Schmelzschweißen oder Ultraschallschweißen miteinander verbunden werden, indem mittels eines Schweißkopfes 24 jeweils zwei profilierte Platten 22 durch einen Schweißdorn 25 gehalten werden.

In dem Anlagenteil I werden zwei Thermoplastfolienbänder 7, 8 von nicht dargestellten Rollen abgewickelt, die Bänder 7, 8 werden durch Heizvorrichtungen 9 im Bereich der oberen 5 und der unteren Bandführung 6 aufgeheizt und mit dem von einer nicht dargestellten Rolle ablaufenden Faserwerkstoff 11, der in der mittleren Führung 10 zwischen den beiden Folienbändern 7, 8 läuft, in dem Duo-Walzgerüst mit dem Kalanderwalzenpaar 3, 4 zu der Faserthermoplastverbundfolie 1 gewalzt.

In dem Anlagenteil II wird die Faserthermoplastverbundfolie 1 durch zwei weitere Stiche in hintereinander angeordneten Duo-Walzgerüsten mit den Kalanderwalzenpaaren 12, 13 nach vorherigem Aufheizen durch die Heizvorrichtungen 9 verdichtet und auf die gewünschte Stärke gewalzt. Nach nochmaligem Aufheizen in weiteren Heizvorrichtungen 9 wird die bandförmige Faserthermoplastverbundfolie 1 durch die Profiliervorrichtung 14 zu einem Folienband mit einem Trapezprofil 17 gewalzt, und anschließend werden die Erhöhungen 20 des Trapezprofilbandes in der Auftragsvorrichtung 18 mit einem Kleber beschichtet. In der darauffolgenden Schneidvorrichtung 21 werden von dem profilierten Band laufend Platten 22 abgeschnitten, deren Länge L ein Vielfaches zuzüglich ein halbes Maß der Teilung X des Trapezprofils 17 beträgt. Schließlich werden die Trapezprofilplatten 22 gestapelt und in einer Preßvorrichtung 23 unter Druck unter ggf. unter nochmaliger Erwärmung zu einem Wabenblock 2 zusammengeklebt, von dem nach dem Aushärten des Klebers Platten mit den gewünschten Abmessungen abgeschnitten werden.

Der in Fig. 2 dargestellte Anlagenteil I zur Herstellung der Faserthermoplastverbundfolie 1 ist durch einen Extruder 26 mit einer Schlitzdüse 27 und ein diesem nachgeordnetes, als Trio-Walzwerk ausgebildetes Folienbandwalzwerk 28 mit einer mittleren Bandführung 29 für das aus dem Extruder 26 austretende Folienband 30 sowie einer oberen Führung 31 für einen Faserwerkstoff 11 gekennzeichnet.

Der Anlagenteil I nach Fig. 3 zur Herstellung der Faserthermoplastverbundfolie 1 ist mit einem horizontalen unteren Förderband 32 und einem parallelen, mit Abstand über diesem angeordneten oberen Förderband 33 ausgerüstet, das sich über den hinteren Bereich des unteren Bandes 32 erstreckt und mit diesem einen Längsspalt 34 bildet. Zwischen dem Obertrum und dem Untertrum der beiden Bänder 32, 33 sind im Bereich des Längsspaltes 34 Heizvorrichtungen 9 eingebaut. Über dem unteren Förderband 32 sind im vorderen Bereich desselben und vor dem oberen Förderband 33 in unterschiedlicher Höhe zwei als Trichter ausgebildete Aufgabestationen 35, 36 für ein Thermoplastgranulat 37 angeordnet. Zwischen den beiden Aufgabestationen 35, 36 befindet sich eine Zuführung mit einer Umlenkrolle 38 zur Einführung eines Faserwerkstoffs 11 unter der zweiten Aufgabestation 36 hindurch in den Längsspalt 34 zwischen den beiden Förderbändern 32, 33, wobei die Laufebene des Faserwerkstoffs 11 durch den Längsspalt 34 im Bereich der mittleren Spaltebene liegt. Durch die Umlenkrollen 32a, 32b und 33a, 33b wird auf die beiden Förderbänder 32, 33 eine bestimmte Walzkraft übertragen und dadurch die in dem Längsspalt 34 befindliche Kunststoffschmelze mit dem Faserwerkstoff 11 zu der Faserthermoplastverbundfolie 1 gewalzt.

## Ansprüche

1. Leichtbauwerkstoff zur Herstellung von Wabenstrukturen, dadurch gekennzeichnet, daß dieser aus einer Faserthermoplastverbundfolie besteht, welche Fasern aus Kohlenstoff, Siliciumkarbid, Whisker oder dgl. in Form von Geweben, Gelegen oder Matten enthält, und daß die Fasern in eine Matrix aus einem Hochtemperaturthermoplast wie Polyetheretherketon, Polyethersulfon oder Polysulfon eingebettet sind.

2. Verfahren zur Herstellung von Wabenstrukturen aus einem Leichtbauwerkstoff nach Anspruch 1, bei dem die bandförmige Folie profiliert und in Platten zerteilt wird, die zu einer Wabenstruktur zusammengeklebt oder durch Schmelz- oder Ultraschallschweißen zusammengeschweißt werden, dadurch gekennzeichnet, daß aufgeheiztes Thermoplastfolienband und Faserwerkstoff durch einen Walzvorgang miteinander verbunden werden.

3. Verfahren nach Anspruch 2, dadurch gekennzeichnet, daß ein oberes und ein unteres aufgeheiztes Thermoplastfolienband und ein zwischen den Folienbändern geführter Faserwerkstoff durch einen Walzvorgang miteinander verbunden werden.

4. Verfahren nach dem Oberbegriff des Anspruchs 2, dadurch gekennzeichnet, daß Thermoplastfolienband extrudiert und anschließend durch einen Walzvorgang mit einem Faserwerkstoff verbunden wird.

5. Verfahren nach dem Oberbegriff des Anspruchs 2, dadurch gekennzeichnet, daß ein Thermoplastgranulat geschmolzen und im Schmelzzustand mit einem Faserwerkstoff zu einer Faserthermoplastverbundfolie gewalzt wird.

6. Verfahren nach einem der Ansprüche 2 bis 5, dadurch gekennzeichnet, daß nach dem Walzen der Faserthermoplastverbundfolie diese durch anschließendes einmaliges oder mehrfaches Aufheizen und Walzen verdichtet und auf die gewünschte Stärke gebracht wird.

7. Verfahren nach einem der Ansprüche 1 bis 6, dadurch gekennzeichnet, daß die profilierte, bandförmige Folie in Platten mit einer Länge (L) zerteilt wird, die ein Vielfaches zuzüglich einem halben Maß der Teilung (X) des Bandprofils beträgt.

8. Anlage zur Durchführung der Verfahren nach den Ansprüchen 2 bis 7, mit einer Profiliervorrichtung für das Folienband, einer Vorrichtung zum Auftragen des Klebers oder einer Schweißvorrichtung, einer Schneidvorrichtung zum Teilen des Folienbandes und einer Preßvorrichtung zum Zusammenkleben bzw. Zusammenschweißen der profilierten Folienplatten, gekennzeichnet durch ein der Profiliervorrichtung (14) vorgeordnetes Duo-Walzgerüst mit einem Kalanderwalzenpaar (3, 4), eine obere und eine untere mit Heizvorrichtungen (9) ausgestattete Bandführung (5, 6) für zwei Thermoplastfolienbänder (7, 8) und eine mittlere Führung (10) für einen Faserwerkstoff (11) im Bandeinlauf.

9. Anlage nach dem Oberbegriff des Anspruchs 8, gekennzeichnet durch einen Extruder (26) mit einer Schlitzdüse (27) zur Herstellung von Thermoplastfolienband (30) und ein diesem nachgeordnetes, vor der Profiliervorrichtung (14) eingebautes Folienbandwalzwerk (28), insbesondere ein Trio-Walzwerk, mit einer mittleren Bandführung (29) für das aus dem Extruder (26) austretende Folienband (30) sowie einer oberen Führung (31) für einen Faserwerkstoff (11) im Bandeinlauf.

10. Anlage nach dem Oberbegriff des Anspruchs 8, gekennzeichnet durch ein vor der Profiliervorrichtung (14) angeordnetes, horizontales unteres Förderband (32) und ein paralleles, mit Abstand über diesem angeordnetes oberes Förderband (33), das sich über den hinteren Bereich des unteren Bandes (32) erstreckt und mit diesem einen Längsspalt (34) bildet, zwischen dem Obertrumm und dem Untertrumm der beiden Bänder (32, 33) im Bereich des Längsspaltes (34) eingebaute Heizvorrichtungen (9), zwei über dem unteren Förderband (32) im vorderen Bereich desselben und vor dem oberen Förderband (33) in unterschiedlicher Höhe angeordnete Aufgabestationen (35, 36), vorzugsweise Aufgabetrichter, für ein Thermoplastgranulat (37) sowie eine zwischen den Aufgabestationen (35, 36) befindliche Zuführung mit einer Umlenkrolle (38) zur Einführung eines Faserwerkstoffs (11) unter der zweiten Aufgabestation (36) hindurch in den Längsspalt (34) zwischen den beiden Förderbändern (32, 33), wobei die Laufebene des Faserwerkstoffs (11) durch den Längsspalt (34) im Bereich der mittleren Spaltebene liegt.

11. Anlage nach einem der Ansprüche 8 bis 10, gekennzeichnet durch ein oder mehrere Walzgerüst bzw. Gerüste mit Kalanderwalzenpaaren (12, 13) sowie eine oder mehrere Heizvorrichtung bzw. Heizvorrichtungen (9) zwischen dem Anlagenteil (I) zur Herstellung der Faserthermoplastverbundfolie (1) und der Profiliervorrichtung (14).

Fig.1

Fig.2

Fig.3

Fig.4

Fig.5

EP 0 368 238 A2

88 366-EP